# EUROPEAN PATENT APPLICATION

(11) **EP 2 854 210 A1**
(43) Date of publication of application: **01.04.2015**
(21) Application number: 14186532.9
(22) Date of filing: 26.09.2014
(51) Int. Cl.: H01M 8/12, H01M 8/24, H01M 8/00, H01M 8/02

(54) **Solid oxide fuel cell stack**

(30) Priority: 27.09.2013 JP 2013200862
(71) Applicant: Toto Ltd., Fukuoka 802-8601 (JP)
(72) Inventor: Ando, Shigeru, Kitakyushu-shi, Fukuoka 8028601 (JP); Watanabe, Naoki, Kitakyushu-shi, Fukuoka 8028601 (JP); Hoshiko, Takuya, Kitakyushu-shi, Fukuoka 8028601 (JP); Tanaka, Shuhei, Kitakyushu-shi, Fukuoka 8028601 (JP); Sato, Masaki, Kitakyushu-shi, Fukuoka 8028601 (JP); Isaka, Nobuo, Kitakyushu-shi, Fukuoka 8028601 (JP); Momiyama, Yutaka, Kitakyushu-shi, Fukuoka 8028601 (JP); Furuya, Seiki, Kitakyushu-shi, Fukuoka 8028601 (JP); Hayama, Kiyoshi, Kitakyushu-shi, Fukuoka 8028601 (JP); Kakinuma, Yasuo, Kitakyushu-shi, Fukuoka, Fukuoka 8028601 (JP); Okamoto, Osamu, Kitakyushu-shi, Fukuoka 8028601 (JP)
(74) Representative: Steil, Christian

(57) **Abstract**

Provided is a solid oxide fuel cell stack (210) including: a porous insulating support (201) having a gas permeability and provided with a gas flow path therein; and a plurality of power generating elements (10) which are provided on the insulating support and each of which includes an inner electrode (202), an outer electrode (204), and an electrolyte (203). The inner electrode (202), the electrolyte (203) and the outer electrode (204) are sequentially laminated one another, and the inner electrode (202) of one of adjacent two of the plurality of power generating elements (10) is electrically connected to the outer electrode (204) of the other of the adjacent two of the plurality of power generating elements (10) via an interconnector (206), so that the plurality of power generating elements (10) are connected in series, wherein the insulating support (201) comprises forsterite, the insulating support (201) contains a Mg element and a Si element with a concentration of 90 mass % or more in total in terms of MgO and SiO₂, at least in a surface region on the power generating elements side, and the interconnector (206) comprises titanium-based perovskite type oxide represented by (A, B) (Ti, C) O_{3-δ}.

## Description

### [Technical Field]

The present invention relates to a horizontal stripe type fuel cell stack with more reliable electrical connection between cells.

### [Background Art]

In a solid oxide fuel cell (hereinafter also referred to as "SOFC"), an oxide ion conductor is used as an electrolyte, and electrodes are attached to both sides of the electrolyte. A fuel gas is supplied to one of the sides, and an oxidizing agent gas (air, oxygen, or the like) is supplied to the other side. In this manner, the fuel cell operates at relatively high temperature.

A conventional horizontal stripe type fuel cell stack comprises: a porous insulating support having a gas permeability and provided with a gas flow path therein; and a plurality of power generating elements which are provided on the insulating support and each of which comprises an inner electrode (fuel electrode), an electrolyte, and an outer electrode (air electrode), the inner electrode, the electrolyte and the outer electrode being sequentially laminated one another, the inner electrode of one of adjacent two of the plurality of power generating elements being electrically connected to the outer electrode of the other of the adjacent two of the plurality of power generating elements via an interconnector, so that the plurality of power generating elements are connected in series.

Since a solid oxide fuel cell generally operates at high temperature of 600 to 1000°C, the solid oxide fuel cell stack has to have electrical connections that withstand such high temperature.

Japanese Patent No. 3064087 (Patent Literature 1) proposes that an insulating support made of calcia-stabilized zirconia (CSZ) and an interconnector made of a metal material or lanthanum chromium oxide used for the electrical connection be sintered at a firing temperature equal to or higher than the operation temperature of the fuel cell to enhance the durability.

Japanese Patent No. 3723189 (Patent Literature 2) proposes that an insulating support be made of calcia-stabilized zirconia (CSZ), and an interconnector material be A₁₋ₓBₓC_{1-Y}D_{Y}O₃, where 0≤X≤0.2 and 0≤Y≤0.2 (excluding a combination of X=0 and Y=0 and a range combination of 0<X≤0.2 and O<Y≤0.2); when X=0 and 0<Y≤0.2, the A component is Mg, the C component is Ti, and the D component is Nb; when 0<X≤0.2 and Y=0, the A component is Mg, the B component is any one of lanthanoids, and the C component is Ti, or the A component is any one of Mg, Ca, Sr, or Ba, the B component is La, and the C component is Ti.

### [Summary of Invention]

Calcia-stabilized zirconia (CSZ) serving as the insulating support proposed by Patent Literature 1 has high specific gravity and specific heat, but a low thermal conductivity (the reference values of dense CSZ: the specific gravity is 6; the specific heat is 460 J/(Kg·K); and the thermal conductivity is 2.4 W/(m·K)). Since most part of the solid oxide fuel cell stack is the insulating support, a module constituted of the solid oxide fuel cell stack in which the insulating support is made of calcia-stabilized zirconia (CSZ) tends to require a long time to increase the temperature of the module by an activation operation from around room temperature to a temperature at which electrical power can be generated, and also require a long time to decrease the temperature thereof by a stop operation from the power-generating temperature to around room temperature.

Moreover, a fuel cell system using the solid oxide fuel cell stack comprising calcia-stabilized zirconia (CSZ) having a high specific gravity as the insulating support tends to have a heavy weight. When installed in an existing house, the fuel cell system is often installed near an existing water heater of the house and there is not enough space left for the fuel cell system to be installed. Accordingly, the weight increase possibly makes such installation difficult in some cases. Further, calcia-stabilized zirconia (CSZ) has a low volume resistivity at high temperature, so that the insulating support has poor performance as an insulation, and there is a tendency that the insulating support incurs leakage current (the reference value of dense CSZ: the volume resistivity at 500°C is 10³ Ω·cm).

To solve these problems, the present inventors have considered adopting forsterite as a material of an insulating support, which forsterite has a low specific gravity, a relatively high thermal conductivity, and a high volume resistivity at high temperature (the reference values of dense forsterite: the specific gravity is 3; the specific heat is 770 J/ (Kg·K); the thermal conductivity is 5 W/ (m·K); and the volume resistivity at 500°C is 10¹⁰ Ω·cm). Although the melting point of pure forsterite containing MgO and SiO₂ with a composition ratio of 2:1 is 1890°C, the melting point of a portion of commercial forsterite is 1557°C. This is because commercial forsterite contains free SiO₂ or free MgO due to industrial difficulty. From these reasons, when forsterite is fired, the firing is performed preferably at 1557°C or lower, more preferably 1400°C or lower. In addition, it is not preferable to expose sintered forsterite at a temperature exceeding 1400°C.

Lanthanum chromium oxide, which is employed as the interconnector material in Patent Literature 1, is not appropriate as an interconnector material because the firing temperature must be high to make the lanthanum chromium oxide dense. Accordingly, such a material cannot be employed as an interconnector when forsterite is used as an insulating support. Moreover, a combination of forsterite having a high thermal expansion coefficient (linear expansion coefficient: 11×10⁻⁶/°C) with lanthanum chromium oxide having a low thermal expansion coefficient (linear expansion coefficient: 8.5×10⁻⁶/°C) is not appropriate because the combination causes a large stress. As a material that has a very similar thermal expansion coefficient to that of forsterite and has an electrical conductivity in a redox atmosphere and which can be sintered at 1400°C or lower, an attention was focused on titanium-based perovskite type oxide, particularly Sr_{0.55}La_{0.3}TiO₃₋₅ (hereinafter referred to as SLT) (linear expansion coefficient: 10×10⁻⁶/°C).

However, although a horizontal stripe type fuel cell stack with this composition was produced, the electrical resistance of SLT did not achieve a designed electrical conductivity, and the power generation performance exhibited was very low. The cause has been examined, and is presumably the following action mechanism.

The insulating support contains forsterite crystals as the main component, and also contains oxides such as MgO, SiO₂, and CaO as impurities. A portion of the impurities diffuses into SLT during the firing. Further, a portion of free Sr from SLT diffuses into forsterite. The impurities and Sr form a glass having a low viscosity. This glass diffuses into the surrounding structure, helps the degradation of SLT, and causes most of Sr in SLT to diffuse to the vicinity of the forsterite layer. As a result, SLT does not have the original composition any more. Hence, the electrical conductivity of the interconnector is greatly lowered, and consequently the power generation performance is lowered. This will be applicable to any of titanium-based perovskite type oxides.

The present inventors have acquired the knowledge that reducing the amount of oxide other than forsterite, preferably reducing a Ca content, in forsterite can prevent the diffusion of Sr in titanium-based perovskite type oxide, particularly SLT.

Accordingly, an object of the present invention is to provide a solid oxide fuel cell stack comprising a plurality of power generating elements electrically connected to each other on an insulating support, the solid oxide fuel cell stack having a low electrical resistance between the power generating elements, thus exhibiting an excellent power generation performance.

Specifically, a solid oxide fuel cell stack of the present invention is a solid oxide fuel cell stack comprising: a porous insulating support having a gas permeability and provided with a gas flow path therein; and a plurality of power generating elements which are provided on the insulating support and each of which comprises an inner electrode (preferably fuel electrode), an electrolyte, and an outer electrode (preferably air electrode), the inner electrode, the electrolyte and the outer electrode being sequentially laminated one another, the inner electrode of one of adjacent two of the plurality of power generating elements being electrically connected to the outer electrode of the other of the adjacent two of the plurality of power generating elements via an interconnector, so that the plurality of power generating elements are connected in series, wherein the insulating support comprises forsterite, the insulating support contains a Mg element and a Si element with a concentration of 90 mass % or more in total in terms of MgO and SiO₂, at least in a surface region on the power generating elements side, and the interconnector comprises titanium-based perovskite type oxide represented by (A,B) (Ti,C)O_{3-δ}, wherein A represents Ca, Sr, Mg, or Ba; B represents Sc, Y, or a lanthanoid element selected from the group consisting of La, Ce, Pr, Nd, Pm, Sm, Eu, Gd, Tb, Dy, Ho, Er, Tm, Yb, and Lu, substituting for a portion of an A site; and C may be present or absent, and if present, represents Nb, Mn, Ga, or Sc, substituting for a Ti site.

In the solid oxide fuel cell stack of the present invention, the insulating support is forsterite light in weight and inexpensive, and the interconnector is titanium-based perovskite type oxide. Hence, the solid oxide fuel cell stack becomes light and inexpensive with highly reliable electrical connection between the power generating elements. Furthermore, the thermal conductivity can be increased, and less time is required for activation or stop operation. Moreover, in the present invention, since the insulating support has a high thermal conductivity, a variation in temperature between an upper end and a lower end of the solid oxide fuel cell stack can be easily reduced. In general, the internal resistance and the electromotive force of each power generating element of a solid oxide fuel cell stack vary in accordance with a temperature; thus, there is an optimal temperature for power generation. Conventionally, the large variation in temperature between the upper and lower ends has hindered all power generating elements from being set at the optimal temperature. In contrast, the present invention makes it possible to set a temperature at which each power generating element provided to the solid oxide fuel cell stack has an optimal power generation ability by reducing the variation in temperature between the upper and lower ends of the solid oxide fuel cell stack. To put it differently, in the conventional techniques, the power generation ability of power generating elements is deteriorated due to low temperature and high internal resistance in some cases; for example, in the conventional techniques, since the temperature of the power generating elements is low, the activation overpotential is increased, and oxygen ions are supplied insufficiently, so that the air electrode material is degraded in some cases. In the present invention, the power generating elements do not have such a high internal resistance that induces the deterioration of the power generation ability, thus enhancing the durability reliability of the solid oxide fuel cell stack.

Further, in the solid oxide fuel cell stack of the present invention, the forsterite in the insulating support enhances the electrical insulation of the insulating support at high temperature. As to two adjacent power generating elements provided on the insulating support, the fuel electrode of one power generating element A is electrically connected to the air electrode of the other power generating element B with the interconnector. Meanwhile, the fuel electrode of the power generating element A is electrically insulated from the fuel electrode of the power generating element B. Nevertheless, in the conventional techniques, since the insulating support is insulated to a low degree at high temperature, leakage current occurs between the fuel electrode of the power generating element A and the fuel electrode of the power generating element B in some cases. The forsterite employed in the present invention is insulated to a high degree at high temperature, reducing the leakage current between the fuel electrode of the power generating element A and the fuel electrode of the power generating element B. These improvements make it possible to provide a solid oxide fuel cell stack exhibiting a favorable power generation performance.

In one embodiment of the solid oxide fuel cell stack of the present invention, the insulating support is forsterite having a linear expansion coefficient of approximately 11×10⁻⁶/°C, and the interconnector is titanium-based perovskite type oxide having a linear expansion coefficient of approximately 10×10⁻⁶/°C. Since the insulating support and the interconnector have a similar thermal expansion coefficient or the insulating support has a higher thermal expansion coefficient, the interconnector receives an adequate compression stress during the entire operations that are activation operation, running operation and stop operation, so that a crack is hardly formed in the interconnector.

According to the present invention, a solid oxide fuel cell stack comprising a plurality of power generating elements electrically connected to each other on an insulating support is provided to exhibit an excellent power generation performance by reducing an electrical resistance between the power generating elements.

### [Brief Description of Drawings]

FIG. 1 is a schematic view of a solid oxide fuel cell stack of the present invention.
FIG. 2 is a schematic view showing a cross section of the vicinity of one power generating element of the solid oxide fuel cell stack of the present invention.
FIG. 3 is a SEM image of a cross section of an interconnector portion in one power generating element of the solid oxide fuel cell stack of the present invention.
FIG. 4 is a graph showing the power generation results in Example 1.
FIG. 5 is a graph showing the power generation results in Example 2.

### [Description of Embodiments]

A solid oxide fuel cell stack of the present invention comprises: a porous insulating support having a gas permeability and provided with a gas flow path therein; and a plurality of power generating elements which are provided on the insulating support and each of which comprises an inner electrode (preferably fuel electrode), an electrolyte, and an outer electrode (preferably air electrode), the inner electrode, the electrolyte and the outer electrode being sequentially laminated one another, the inner electrode of one of adjacent two of the plurality of power generating elements being electrically connected to the outer electrode of the other of the adjacent two of the plurality of power generating elements via an interconnector, so that the plurality of power generating elements are connected in series. In the solid oxide fuel cell stack, the insulating support comprises forsterite, and the interconnector comprises titanium-based perovskite type oxide. According to a preferable embodiment of the solid oxide fuel cell stack of the present invention, the insulating support consists of forsterite, and the interconnector consists of titanium-based perovskite type oxide.

The shape of the solid oxide fuel cell stack of the present invention is not particularly limited. The fuel cell may have for example a cylindrical shape, a planar shape, a hollow planar shape in which a plurality of gas flow paths are formed, or other similar shapes.

In the present invention, a solid oxide fuel cell stack in which a plurality of power generating elements are formed in series on the insulating support, which solid oxide fuel cell stack is called a horizontal stripe type cell, is preferably provided. Here, the power generating element means a laminate including an inner electrode (fuel electrode or air electrode), an electrolyte, and an outer electrode (air electrode or fuel electrode), each of which is sequentially laminated. In the solid oxide fuel cell stack of the present invention, the number of the power generation elements can be, for example, 2 to 100, preferably 4 to 50, and more preferably 10 to 20.

### Insulating Support

In the solid oxide fuel cell stack of the present invention, the insulating support contains forsterite. The insulating support is a sintered compact containing forsterite (Mg₂SiO₄) crystals, crystalline and/or amorphous MgO, crystalline and/or amorphous SiO₂, and other glassy materials and impurities. The insulating support contains a Mg element and a Si element with a concentrations of 90 mass %, preferably 95 mass %, more preferably 98 mass % or more in total, in terms of MgO and SiO₂, at least in a surface region on the power generating elements side. In the fuel cell stack of the present invention, the insulating support is more preferably such that a sum of peak intensities of first diffraction lines (i.e., diffraction lines having the highest intensity) of crystal components other than forsterite crystal obtained by X-ray diffraction (the sum is hereinafter referred to as a) is 5 or less, provided that the peak intensity (hereinafter b) of a first diffraction line of the forsterite crystal is 100 (i.e., a/b = 5% or less).

Preferably, the insulating support consists essentially of forsterite (i.e., mainly formed from forsterite). For example, the insulating support comprises at least 90 mass % of forsterite. Preferably, the insulating support contains a Ca element with a concentration of 0.2 mass % or less, more preferably 0.1 mass % or less, further preferably 0.06 mass % or less, in terms of CaO at least in the surface region on the power generating elements side, or may contain no Ca element.

Herein, the term "surface region" means a region that covers a depth of approximately 100 µm from the surface. The Ca, Mg, and Si element contents in such a surface region can be measured, for example, by the x-ray-fluorescence-analysis (XRF). The measurement sample is prepared as follows. Specifically, the laminated surface of the fuel cell is mechanically stripped, and then the surface of the exposed porous support is mechanically ground up to the depth of approximately 100 µm to obtain the sample to be measured by XRF. Moreover, when the Ca element content is quantified by XRF, a one point calibration curve is created using JCRM R 901 talc powder which is a certified reference material by the Ceramic Society of Japan. Further, Mg and Si are quantified by a known calibration curve method.

The Ca element concentration distribution in the insulating support may be uniform, or may have a smaller Ca element concentration toward the surface on the power generating elements side. Alternatively, the insulating support may be a laminate including two or more layers having different Ca element contents from each other. When the used insulating support has a gradation of Ca element concentration distribution toward the surface on the power generating elements side, or when the insulating support is a laminate including two or more layers, the Ca element content in any regions other than the surface region on the power generating elements side may exceed 0.2 mass %. The insulating support is obtained by preparing a compact having a Ca element content within a predetermined range, and then firing the compact. The insulating support is preferably obtained by preparing a compact by mixing a raw material containing forsterite and a Ca element with the Ca element concentration being higher than the aforementioned range with a raw material containing forsterite and a Ca element with the Ca element concentration being lower than the aforementioned range so that the compact can have a Ca element content within the predetermined range, and then firing the compact.

### Inner Electrode and Outer Electrode

In the solid oxide fuel cell stack of the present invention, the inner electrode is preferably a fuel electrode. The reason is as follows. Specifically, the insulating support and a current collecting layer are selected to have a porous structure with a good gas permeability. The insulating support has to be capable of keeping the structure of the cell. For this reason, the insulating support is made thicker than the current collecting layer that is merely required to have an electrical conductivity. In other words, the insulating support tends to have a lower gas permeability than the current collecting layer. In a case where the inner electrode is an air electrode, oxygen in the air permeates through the insulating support. It is known that the gas diffusion rate of a hydrogen gas is several times faster than that of an oxygen gas. Accordingly, the gas diffusion overpotential in the case where the inner electrode is an air electrode is higher than that in the case where the inner electrode is a fuel electrode. As a result, the solid oxide fuel cell stack tends to have a poor power generation performance in the case where the inner electrode is an air electrode. In other words, in the case where the inner electrode is a fuel electrode, the solid oxide fuel cell stack has a superior power generation performance. Furthermore, in the case where SLT is used for an interconnector, a stress occurs at the interface between the insulating support and the interconnector if the insulating support and the interconnector are directly laminated, due to a difference in thermal expansion coefficient between the forsterite used for the insulating support (linear expansion coefficient: 11×10⁻⁶/°C) and the SLT used for the interconnector (linear expansion coefficient: 10×10⁻⁶/°C). In the case where the inner electrode is a fuel electrode, the fuel electrode is present between the forsterite made insulating support and the SLT made interconnector, and thus the fuel electrode turned to Ni by a reduction relaxes the stress. In the case where the inner electrode is a fuel electrode, the outer electrode is an air electrode.

### Fuel Electrode

In the solid oxide fuel cell stack of the present invention, the fuel electrode includes NiO/zirconium-containing oxide, NiO/cerium-containing oxide, and the like. The fuel electrode contains at least any of these. Here, the NiO/zirconium-containing oxide means one obtained by uniformly mixing NiO with a zirconium-containing oxide in a predetermined ratio. The NiO/cerium-containing oxide means one obtained by uniformly mixing NiO with a cerium-containing oxide in a predetermined ratio. The zirconium-containing oxide in the NiO/zirconium-containing oxide includes zirconium-containing oxides doped with one or more of, for example, CaO, Y₂O₃, and Sc₂O₃, and the like. The cerium-containing oxide in the NiO/cerium-containing oxide includes, for example, ones represented by a general formula Ce_{1-y}Ln_{y}O₂, where Ln is any one of or a combination of two or more of La, Pr, Nd, Sm, Eu, Gd, Tb, Dy, Ho, Er, Tm, Yb, Lu, Sc, and Y, 0.05≤y≤0.50. Note that since NiO is reduced under a fuel atmosphere and turned into Ni, the mixture becomes Ni/zirconium-containing oxide or Ni/cerium-containing oxide. The fuel electrode may be composed of a single layer or multiple layers. In the case where the fuel electrode as the inner electrode includes multiple layers, for example, Ni/YSZ (yttria-stabilized zirconia) is used for a layer at the support side, while Ni/GDC (Gd₂O₃-CeO₂) (= fuel electrode catalyst layer) is used for a layer at the electrolyte side.

### Air Electrode

In the solid oxide fuel cell stack of the present invention, examples of the air electrode includes lanthanum-cobalt-based oxides such as La₁₋ₓSrₓCoO₃ (where x = 0.1 to 0.3) and LaCo₁₋ₓNiₓO₃ (where x = 0.1 to 0.6), lanthanum-ferrite-based oxide (La₁₋ₘSrₘCo₁₋ₙFeₙO₃ (where 0.05<m<0.50, 0<n<1)) which is a solid solution of (La, Sr)FeO₃ and (La, Sr) CoO₃. The air electrode may be composed of a single layer or multiple layers. In the case where the air electrode as the outer electrode includes multiple layers, for example, La_{0.6}Sr_{0.4}Co_{0.2}Fe_{0.8}O₃ (= air electrode catalyst layer) is used for a layer at the electrolyte side, while La_{0.6}Sr_{0.4}Co_{0.5}Fe_{0.2}O₃ (= air electrode) is used for the outermost layer.

### Electrolyte

In the solid oxide fuel cell stack of the present invention, the electrolyte includes lanthanum-gallate-based oxide, stabilized zirconia doped with one or more of Y, Ca, and Sc, and the like. The electrolyte is preferably lanthanum-gallate-based oxide doped with Sr and Mg, more preferably lanthanum-gallate-based oxide (LSGM) represented by a general formula La₁₋ₐSrGa_{1-b-c}Mg_{b}CO_{c}O₃ (where 0.05≤a≤0.3, 0<b<0.3, 0≤c≤0.15). Here, a layer of the electrolyte may be provided at the fuel electrode side as a reaction prevention layer that includes ceria doped with La (Ce₁₋ₓLaₓO₂ (where 0.3<x<0.5)). The reaction prevention layer is preferably Ce_{0.6}La_{0.4}O₂. The electrolyte may be composed of a single layer or multiple layers. In the case where the solid electrolyte includes multiple layers, for example, a reaction prevention layer such as Ce_{0.6}La_{0.4}O₂ is used between the fuel electrode and the electrolyte layer made of LSGM.

### Current Collecting Layer

In the solid oxide fuel cell stack of the present invention, the current collecting layer is provided to electrically connect the outer electrode to the interconnector, and is excellent in gas permeability. In the case where the outer electrode is an air electrode, the current collecting layer can be formed by baking a conductive paste containing a noble metal such as Ag or Pt, or a paste containing a conductive oxide such as La_{0.6}Sr_{0.4}Co_{0.8}Fe_{0.2}O₃. Meanwhile, in the case where the outer electrode is a fuel electrode, the current collecting layer can be forming by baking a paste containing a metal oxide or metal such as NiO or Ni which exhibit an electrical conductivity upon reduction. Additionally, the current collecting layer preferably has a porous structure, a mesh structure, or other similar structures so as to have a gas permeability.

### Interconnector

In the solid oxide fuel cell stack of the present invention, the interconnector comprises titanium-based perovskite type oxide represented by (A, B) (Ti,C) O_{3-δ}. Here, A is an alkaline earth metal such as, for example, calcium (Ca), strontium (Sr), magnesium (Mg), or barium (Ba). B is a metal substitutable for a portion of A in the formula, and is a trivalent metal such as, for example, Ln (which represents a lanthanoid element (La, Ce, Pr, Nd, Pm, Sm, Eu, Gd, Tb, Dy, Ho, Er, Tm, Yb, or Lu)), scandium (Sc), or yttrium (Y). C is a metal substitutable for a portion of titanium in the formula, and is for example niobium (Nb), manganese (Mn), gallium (Ga), scandium (Sc), or the like. δ is an amount of oxygen deficiency and, preferably 0 or more and 0.8 or less, more preferably 0 or more and 0.15 or less. In the solid oxide fuel cell stack of the present invention, Sr_{1-3x/2}LaₓTi_{1-y}O_{3-δ} is preferably usable, where A is Sr, B is La, and C is absent. More preferable is a general formula: Sr_{1-3X/2}LaₓTi_{1-y}O_{3-δ}, where 0.1<X≤0.4, 0≤y≤0.4 and 0≤δ≤0.8. Further preferable is a general formula: Sr_{1-3X/2}LaₓTi_{1-y}O_{3-δ}, where 0.28≤X≤0.40, 0≤y≤0.075 and 0≤5≤0.15.

### Structure of Cell Stack

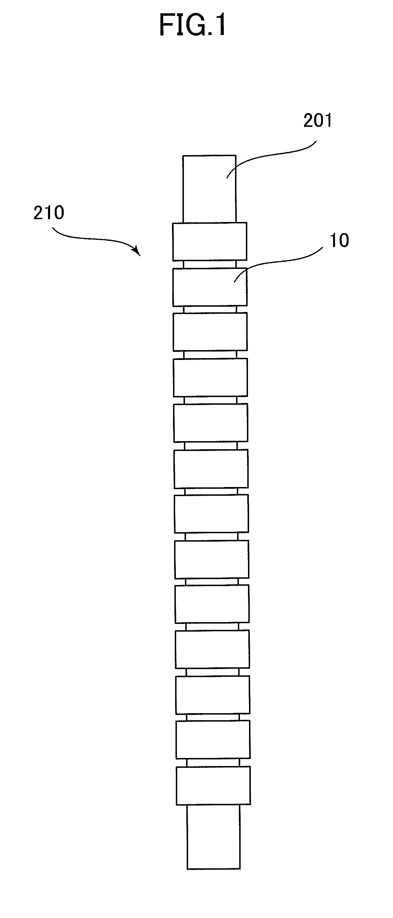

FIG. 1 shows a complete view of a solid oxide fuel cell stack 210 of the present invention. On an insulating support 201, 13 power generating elements 10 are arranged in series.

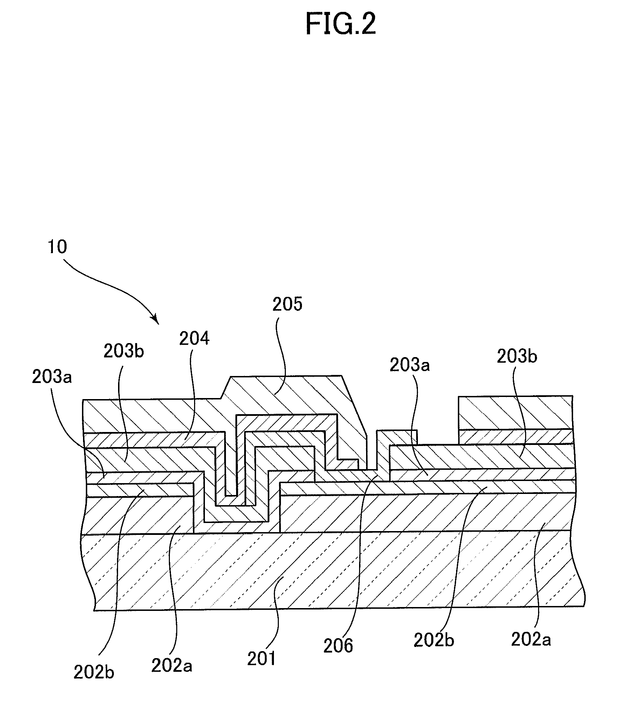

FIG. 2 is a schematic view showing one aspect of a cross section of the vicinity of the power generating element 10 arranged on the solid oxide fuel cell stack 210 of the present invention. Shown is a type in which a fuel electrode is used as the inner electrode. The solid oxide fuel cell stack 210 in the present invention comprises, for example, an insulating support 201, a (first/second) fuel electrode 202 (i.e., in FIG. 2, a fuel electrode layer 202a and a fuel electrode catalyst layer 202b), a (first/second) solid electrolyte 203 (i.e., in FIG. 2, a reaction prevention layer 203a and an electrolyte layer 203b), an air electrode 204, a current collecting layer 205, and an interconnector 206. Here, (first/second) means "being a single layer or two layers, and in the case of two layers, having a first layer and a second layer."

In the solid oxide fuel cell stack of the present invention, the thickness of each layer is preferably: 0.5 to 2 mm for the insulating support, 10 to 200 µm for the fuel electrode layer, 0 to 30 µm for the fuel electrode catalyst layer, 0 to 20 µm for the reaction prevention layer, 5 to 60 µm for the electrolyte layer, 0 to 30 µm for the air electrode, 10 to 200 µm for the current collecting layer, and 5 to 50 µm for the interconnector.

### Method for Producing Cell Stack

A method for producing the solid oxide fuel cell stack of the present invention is not particularly limited. The solid oxide fuel cell stack of the present invention can be produced, for example, as follows.

A solvent (such as water or alcohol) is added to a raw-material powder containing forsterite to prepare a green body. In this event, an optional component such as a dispersant, a binder, an anti-foaming agent, a pore forming, and a lubricant agent may be added. Such an optional component may be properly selected in accordance with a forsterite-containing raw-material powder to be used. The green body thus prepared is molded, dried, and then pre-fired (800°C or higher but lower than 1100°C) to obtain a pre-fired form of the porous insulating support. For molding the green body, a sheet molding method, a press molding method, an extrusion molding method, or the like is employed. In the case of an insulating support in which a gas flow path is formed, an extrusion molding method is preferable. When the insulating support forming multiple layers is molded, in addition to a method of "multilayer extrusion" in which the multiple layers are integrally extruded, a method in which the upper layer is formed by coating or printing can also be employed. The coating method includes a slurry coating method in which a raw material slurry is applied, a tape casting method, a doctor blade method, a transferring method, and the like. The printing method includes a screen printing method, an inkjet method, and the like. The pre-fired form of the insulating support is fired alone, or together with at least the inner electrode and so on as described later, at 1100°C or higher but lower than 1400°C to thus obtain the insulating support.

The inner electrode, the electrolyte, the interconnector, and the outer electrode can be obtained as follows. Specifically, to each raw-material powder, a solvent (such as water or alcohol) and a molding additive such as a dispersant or a binder are added to prepare a slurry or a paste. The slurry or the paste is applied and dried to obtain a dried coating film. After that, the dried coating film thus formed is fired (1100°C or higher but lower than 1400°C). The slurry or the paste can be applied by the same method that can be employed for the coating of the upper layer of the porous support including multiple layers. Alternatively, each dried coating film may be formed as a transfer sheet in advance, and then pasted as a transfer film and thus provided to a laminate precursor.

According to a preferable embodiment of the production method of the present invention, the firing is preferably performed every time each layer of the electrodes, the electrolyte, and the interconnector is formed. Specifically, the present embodiment comprises at least: a step of forming and drying a coating film of an inner electrode on a surface of an insulating support or a pre-fired form thereof, followed by firing to form the inner electrode; a step of forming and firing a dried coating film of an electrolyte to form the electrolyte; and a step of forming a dried coating film of an interconnector, followed by firing to form the interconnector. In the present embodiment, after the electrolyte is formed, an outer electrode is obtained by forming and firing a dried coating film thereof. Moreover, a current collecting layer is formed after the outer electrode and the interconnector are formed.

According to another preferable embodiment of the production method of the present invention, after an inner electrode and an electrolyte are formed by co-firing, an interconnector is formed. This embodiment comprises: a step of forming a dried coating film of an inner electrode on a surface of an insulating support or a pre-fired form thereof; followed by a step of forming a dried coating film of an electrolyte; and, after these steps, a step of obtaining the inner electrode and the electrolyte by co-firing at 1100°C or higher but lower than 1400°C. Thus, a fired product comprising the insulating support, the inner electrode, and the electrolyte is obtained. Then, a raw-material coating film of an interconnector is formed on the fired product and fired. In the present embodiment, an outer electrode may be co-fired together with the inner electrode and the electrolyte, or may be obtained, after the electrolyte is formed, by forming and firing a dried coating film thereof. Moreover, a current collecting layer is formed after the outer electrode and the interconnector are formed.

In these two embodiments, when the interconnector is to be obtained, the maximum firing temperature is preferably lower by 50°C to 150°C both inclusive than the higher temperature of the following two: the maximum temperature in firing the inner electrode, and the maximum temperature in firing the electrolyte (in the case where the inner electrode and the electrolyte are co-fired, the two temperatures are the same). By changing the firing temperature in this manner, the insulating support is stabilized and the diffusion of Sr is prevented, so that the original titanium-based perovskite type oxide, particularly SLT, can exhibit its properties even after firing.

According to another preferable embodiments of the production method of the present invention, after dried coating films of an inner electrode, an electrolyte, and an interconnector are formed on a pre-fired form of an insulating support, "co-firing" may be performed in which these multiple layers are fired at once. In the present invention, the insulating support has a low impurity concentration. Accordingly, even if the insulating support is co-fired with the interconnector, the generation of a reaction product that decreases the power generation performance is suppressed.

In these production methods, in order not to degrade the electrolyte by the diffusion of the dopant or the like, the firing is preferably performed in an oxidizing atmosphere. More preferably, a gas mixture of air with oxygen is used, and the firing is performed in such an atmosphere that the oxygen concentration is 20 mass % to 30 mass % both inclusive.

A solid oxide fuel cell system using the solid oxide fuel cell stack of the present invention is not particularly limited with regard to the production method thereof, materials thereof, and the like.

### [Examples]

The present invention will be described in more details based on the following Examples. Note that the present invention is not limited to these Examples.

### (Example 1)

### (Preparation of Green Body for Insulating Support)

A high purity forsterite (Mg₂SiO₄ raw material containing a Mg element and a Si element with a concentration of 99.5 mass % in total in terms of MgO and SiO₂, and a Ca element with a concentration of 0.05 mass % in terms of CaO) powder was adjusted to have an average particle diameter of 0.7 µm. After 100 parts by weight of the powder was mixed with 20 parts by weight of a solvent (water), 8 parts by weight of a binder (methyl cellulose), 0.5 parts by weight of a lubricant, and 15 parts by weight of a pore forming agent (acrylic resin particles having an average particle diameter of 5 µm) using a high-speed mixer, the mixture was kneaded with a kneader and deaerated with a vacuum kneader. Thus, a green body for extrusion was prepared. Here, the average particle diameter was measured according to JIS R 1629, and expressed in a 50% diameter (the same applies hereinafter).

### (Preparation of Paste for Fuel Electrode Layer)

A NiO powder and a 10YSZ (10 mol% Y₂O₃-90 mol% Zr02) powder were wet-mixed in a weight ratio of 65 : 35 to prepare a dry powder. The average particle diameter was adjusted to be 0.7 µm. After 150 parts by weight of the powder was mixed with 100 parts by weight of a solvent (carbitol), 6 parts by weight of a binder (soluble polymer), 2 parts by weight of a dispersant (nonionic surfactant), and 2 parts by weight of an anti-foaming agent (organic polymer based), the mixture was fully stirred to prepare a paste.

### (Preparation of Paste for Fuel Electrode Catalyst Layer)

A mixture of a NiO powder and a GDC10 (10 mol% GdO_{1.5}-90 mol% CeO₂) powder was prepared by a co-precipitation method and then heat treated. Thus, a fuel electrode catalyst layer powder was obtained. The mixing ratio of the NiO powder and the GDC10 powder was 50/50 by weight. The average particle diameter was adjusted to be 0.5 µm. After 100 parts by weight of the powder was mixed with 100 parts by weight of a solvent (carbitol), 5 parts by weight of a binder (soluble polymer), 2 parts by weight of a dispersant (nonionic surfactant), and 2 parts by weight of an anti-foaming agent (organic polymer based), the mixture was fully stirred to prepare a paste.

### (Preparation of Paste for Reaction Prevention Layer)

The material used for a reaction prevention layer was 50 parts by weight of a powder of the aforementioned cerium-based oxide (LDC40, that is, 40 mol% LaO_{1.5}-60 mol% CeO₂). The powder was mixed with 0.04 parts by weight of a Ga₂O₃ powder as a sintering additive, and further mixed with 100 parts by weight of a solvent (carbitol), 4 parts by weight of a binder (soluble polymer), 1 part by weight of a dispersant (nonionic surfactant), and 1 part by weight of an anti-foaming agent (organic polymer based). After that, the mixture was fully stirred to prepare a paste.

### (Preparation of Paste for Electrolyte Layer)

The material used for an electrolyte layer was an LSGM powder having a composition of La_{0.9}Sr_{0.1}Ga_{0.8}Mg_{0.2}O₃. After 50 parts by weight of the LSGM powder was mixed with 100 parts by weight of a solvent (carbitol), 4 parts by weight of a binder (soluble polymer), 1 part by weight of a dispersant (nonionic surfactant), and 1 part by weight of an anti-foaming agent (organic polymer based), the mixture was fully stirred to prepare a paste.

### (Preparation of Paste for Air Electrode)

The material used for an air electrode was a powder having a composition of La_{0.6}Sr_{0.4}Co_{0.2}Fe_{0.8}O₃. After 40 parts by weight of the powder was mixed with 100 parts by weight of a solvent (carbitol), 2 parts by weight of a binder (soluble polymer), 1 part by weight of a dispersant (nonionic surfactant), and 1 part by weight of an anti-foaming agent (organic polymer based), the mixture was fully stirred to prepare a paste.

### (Preparation of Paste for Interconnector)

The material used for an interconnector was a powder having a composition of Sr_{0.55}La_{0.3}TiO_{3-δ}. After 40 parts by weight of the powder was mixed with 100 parts by weight of a solvent (carbitol), 4 parts by weight of a binder (soluble polymer), 1 part by weight of a dispersant (nonionic surfactant), and 1 part by weight of an anti-foaming agent (organic polymer based), the mixture was fully stirred to prepare a paste.

### (Preparation of Solid Oxide Fuel Cell Stack)

Using the green body and the pastes obtained as described above, a solid oxide fuel cell stack was prepared by the following method.

The green body for porous insulating support was extruded to prepare a cylindrical compact. The compact was dried at room temperature, and then heat treated at 1100°C for 2 hours to thereby prepare a pre-fired form of an insulating support. On the insulating support, a fuel electrode layer, a fuel electrode catalyst layer, a reaction prevention layer, and an electrolyte layer were formed in that order by an inkjet method, and dried to obtain a laminate. This laminate was co-fired at 1300°C for 2 hours.

Next, an interconnector was formed thereon by an inkjet method. These were fired at 1250°C for 2 hours.

Next, an air electrode layer was formed on the surface of the electrolyte layer and fired at 1100°C for 2 hours. It should be noted that the insulating support was adapted to have an outside diameter of 10 mm and a thickness of 1 mm after co-firing. In the prepared solid oxide fuel cell stack, the fuel electrode layer was adapted to have a thickness of 100 µm, the fuel electrode catalyst layer was adapted to have a thickness of 10 µm, the reaction prevention layer was adapted to have a thickness of 10 µm, the solid electrolyte layer was adapted to have a thickness of 30 µm, the air electrode was adapted to have a thickness of 20 µm, and the interconnector was adapted to have a thickness of 15 µm. In addition, the outside diameter of the insulating support was measured using a micrometer at a portion where no film was formed. Each thickness was obtained by; cutting the cell after a power generation test on the system, observing the cross section with a SEM at any magnification from 30 to 2000, and then dividing by 2 the sum of the maximum value and the minimum value of the thickness. The cutting point was a central portion of the region where the air electrode was formed.

### (Power Generation Test)

Using the obtained solid oxide fuel cell stack, a power generation test was conducted. For the collection of the current, a current collecting metal is pasted to an exposed portion of the fuel electrode on one end of the cell stack with a silver paste and they are baked, and a silver paste is applied to the surface of the air electrode of every power generating element for the purpose of forming a current collecting layer, and then a current collecting metal is pasted to an end of the air electrode on the other end of the cell stack with a silver paste and they are baked.

The conditions for power generation were as follows.
Fuel gas: a gas mixture of (H₂+3%H₂O) and N₂ (the mixing ration was H₂:N₂ = 7:4 (vol:vol))
Fuel utilization: 75%
Oxidant gas: air
Operation temperature: 700°C
Current density: from 0.0 A/cm² to 0.4 A/cm²

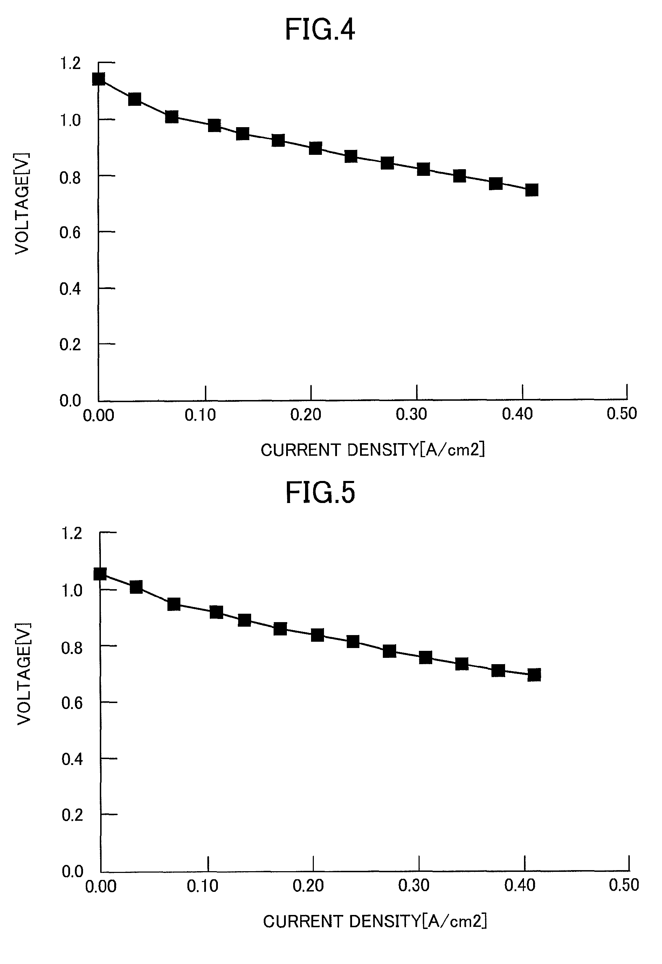

Under these conditions, the power generation test was conducted. FIG. 4 shows the results. The horizontal axis represents the current density, and the vertical axis represents the electric potential per power generating element.

A stack was prepared by bundling 72 solid oxide fuel cell stacks obtained in the above-described manner. The time required for the activation operation of the stack thus prepared was shortened to approximately 2/3 (67%) of that of a conventional stack (prepared using cell stacks whose insulating support was made of calcia-stabilized zirconia).

### (Cross-Sectional Observation of Solid Oxide Fuel Cell Stack)

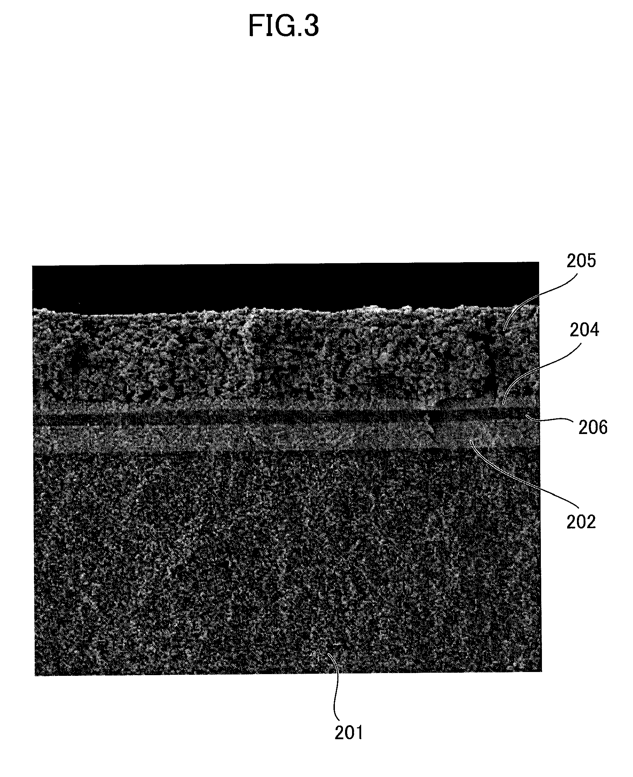

The cross section of the vicinity of the interconnector in the power generating element of the solid oxide fuel cell stack obtained in Example 1 was observed with a SEM. It can be seen from FIG. 3 that the insulating support 201, the fuel electrode layer 202, the interconnector 206, the air electrode 204, and the current collecting layer 205 were formed between two adjacent power generating elements of the solid oxide fuel cell stack of the present invention.

### (Example 2)

### (Preparation of Green Body for Insulating Support)

A high purity forsterite (Mg₂SiO₄ raw material containing a Mg element and a Si element with a concentration of 99.5 mass % in total in terms of MgO and SiO₂, and a Ca element with a concentration of 0.02 mass % in terms of CaO) powder was adjusted to have an average particle diameter of 0.7 µm. After 100 parts by weight of the powder was mixed with 20 parts by weight of a solvent (water), 8 parts by weight of a binder (methyl cellulose), 0.5 parts by weight of a lubricant, and 15 parts by weight of a pore forming agent (acrylic resin particles having an average particle diameter of 5 µm) using a high-speed mixer, the mixture was kneaded with a kneader and deaerated with a vacuum kneader. Thus, a green body for extrusion was prepared. Here, the average particle diameter was measured according to JIS R 1629, and expressed in a 50% diameter.

### (Preparation of Paste for Fuel Electrode Layer)

A paste for fuel electrode layer was prepared in the same manner as in Example 1.

### (Preparation of Paste for Fuel Electrode Catalyst Layer)

A paste for fuel electrode catalyst layer was prepared in the same manner as in Example 1.

### (Preparation of Paste for Reaction Prevention Layer)

A paste for reaction prevention layer was prepared in the same manner as in Example 1.

### (Preparation of Paste for Electrolyte Layer)

A paste for electrolyte layer was prepared in the same manner as in Example 1.

### (Preparation of Paste for Air Electrode)

A paste for air electrode was prepared in the same manner as in Example 1.

### (Preparation of Paste for Interconnector)

A paste for interconnector was prepared in the same manner as in Example 1.

### (Preparation of Solid Oxide Fuel Cell Stack)

Using the green body and the pastes obtained as described above, a solid oxide fuel cell stack was prepared by the following method.

The green body for porous insulating support was extruded to prepare a cylindrical compact. The compact was dried at room temperature, and then heat treated at 1100°C for 2 hours to thereby prepare an insulating support. On the insulating support, a fuel electrode layer, a fuel electrode catalyst layer, a reaction prevention layer, an electrolyte layer, and an interconnector layer were formed in that order by an inkjet method. This layered assembly was co-fired at 1300°C for 2 hours.

Next, an air electrode layer was formed on the surface of the electrolyte layer and fired at 1100 °C for 2 hours. It should be noted that the insulating support was adapted to have an outside diameter of 10 mm and a thickness of 1 mm after co-firing. In the prepared solid oxide fuel cell stack, the fuel electrode layer was adapted to have a thickness of 100 µm, the fuel electrode catalyst layer was adapted to have a thickness of 10 µm, the reaction prevention layer was adapted to have a thickness of 10 µm, the electrolyte layer was adapted to have a thickness of 30 µm, the air electrode was adapted to have a thickness of 20 µm, and the interconnector was adapted to have a thickness of 15 µm. In addition, the outside diameter of the insulating support was measured using a micrometer at a portion where no film was formed. Each thickness was obtained by; cutting the cell after a power generation test on the system, observing the cross section with a SEM at any magnification from 30 to 2000, and then dividing by 2 the sum of the maximum value and the minimum value of the thickness. The cutting point was a central portion of the region where the air electrode was formed.

### (Power Generation Test)

Using the obtained solid oxide fuel cell stack, a power generation test was conducted under the same conditions as those in Example 1. FIG. 5 shows the results. The horizontal axis represents the current density, and the vertical axis represents the electric potential per power generating element.

A stack was prepared by bundling 72 solid oxide fuel cell stacks obtained in the above-described manner. The time required for the activation operation of the stack thus prepared was shortened to approximately 2/3 (67%) of that of the conventional stack (prepared using cell stacks whose insulating support was calcia-stabilized zirconia).

### (Example 3)

Example 3 was conducted in the same manner as in Example 1, except that the high purity forsterite used to prepare a green body for insulating support had a CaO concentration of 0.3 mass %.

### (Power Generation Test)

Using the obtained solid oxide fuel cell stack, a power generation test was conducted under the same conditions as those in Example 1. As a result, the solid oxide fuel cell stack of Example 3 had an OCV (0.0 A/cm²) of 1.08 V, the electric potential per power generating element at a current density of 0.20 A/cm² was 0.81 V, and the electric potential per power generating element at a current density of 0.40A/cm² was 0.63 V. Hence, favorable power generation results were obtained.

A stack was prepared by bundling 72 solid oxide fuel cell stacks obtained in the above-described manner. The time required for the activation operation of the stack thus prepared was shortened to approximately 2/3 (67%) of that of the conventional stack (prepared using cell stacks whose insulating support was calcia-stabilized zirconia).

### (Example 4)

### (Preparation of Green Body for Insulating Support)

A high purity forsterite (Mg₂SiO₄ raw material containing 0.05 mass % CaO) powder having an Mg/Si molar ratio of 1.98 and a peak ratio a/b (quotient of a divided by b) of 0.0, which was determined by a method described later, was adjusted to have an average particle diameter of 0.7 µm. After 100 parts by weight of the powder was mixed with 0.3 parts by weight of a SrCO₃ powder, 20 parts by weight of a solvent (water), 8 parts by weight of a binder (methyl cellulose), 0.5 parts by weight of a lubricant, and 15 parts by weight of a pore forming agent (acrylic resin particles having an average particle diameter of 5 µm) using a high-speed mixer, the mixture was kneaded with a kneader and deaerated with a vacuum kneader. Thus, a green body for extrusion was prepared.

### (Measurement of Peak Ratio a/b (Quotient of a Divided by b) by Powder X-Ray Diffraction)

Instrument: X-ray diffractometer "X" Pert PRO" manufactured by PANalytical B.V.
Detector: semiconductor array detector with 100 channels of detecting elements
X-ray output: (Cu sealed tube) tube voltage 40 kV-tube current 40 mA
Characteristic X-ray: Cu-Kα radiation
Filter: Ni
Scanning method: step scanning (Scanning Step Size: 0.05°)
Sample processing: powder pressing

With the above-described equipment and conditions, detected intensities at 2θ = 10° to 90° were measured. The peak intensity of a first diffraction line of the forsterite crystal appeared at 2θ = 36.5° to 37.0°. A single peak intensity of a first diffraction line of a crystal that is considered to have been derived from an impurity appeared at 2θ = 26.5° to 27.0°. A ratio of a maximum peak height, a, which appeared at 2θ = 26.5° to 27.0° to a maximum peak height, b, which appeared at 2θ = 36.5° to 37.0°, that is, a/b as a peak ratio, was expressed by percentage. Note that each peak height is a value obtained by subtracting the intensity of the background from the peak intensity.

### (Preparation of Paste for Fuel Electrode Layer)

A paste for fuel electrode layer was prepared in the same manner as in Example 1.

### (Preparation of Paste for Fuel Electrode Catalyst Layer)

A paste for fuel electrode catalyst layer was prepared in the same manner as in Example 1.

### (Preparation of Paste for Reaction Prevention Layer)

A paste for reaction prevention layer was prepared in the same manner as in Example 1.

### (Preparation of Paste for Electrolyte Layer)

A paste for electrolyte layer was prepared in the same manner as in Example 1.

### (Preparation of Paste for Air Electrode)

A paste for air electrode was prepared in the same manner as in Example 1.

### (Preparation of Paste for Interconnector)

A paste for interconnector was prepared in the same manner as in Example 1.

### (Preparation of Solid Oxide Fuel Cell Stack)

Using the green body and the pastes obtained as described above, a solid oxide fuel cell stack was prepared by the following method.

The green body for porous insulating support was extruded to prepare a cylindrical compact. The compact was dried at room temperature, and then heat treated at 1100°C for 2 hours to thereby prepare a pre-fired form of an insulating support. On the pre-fired form of the insulating support, a fuel electrode layer, a fuel electrode catalyst layer, a reaction prevention layer, an electrolyte layer, and an interconnector were formed in that order by an inkj et method, and dried to obtain a laminate. This laminate was co-fired at 1300°C for 2 hours.

Next, an air electrode layer was formed on the surface of the electrolyte layer and fired at 1100°C for 2 hours. It should be noted that the insulating support was adapted to have an outside diameter of 10 mm and a thickness of 1 mm after co-firing. In the prepared solid oxide fuel cell stack, the fuel electrode layer was adapted to have a thickness of 100 µm, the fuel electrode catalyst layer was adapted to have a thickness of 10 µm, the reaction prevention layer was adapted to have a thickness of 10 µm, the solid electrolyte layer was adapted to have a thickness of 30 µm, the air electrode was adapted to have a thickness of 20 µm, and the interconnector was adapted to have a thickness of 15 µm. In addition, the outside diameter of the insulating support was measured using a micrometer at a portion where no film was formed. Each thickness was obtained by; cutting the cell after a power generation test on the system, observing the cross section with a SEM at any magnification from 30 to 2000, and then dividing by 2 the sum of the maximum value and the minimum value of the thickness. The cutting point was a central portion of the region where the air electrode was formed.

### (Power Generation Test)

Using the obtained solid oxide fuel cell stack, a power generation test was conducted under the same conditions as those in Example 1. Table 1 shows the results.

### (Examples 5 to 8)

### (Preparation of Green Body for Insulating Support)

A high purity forsterite (Mg₂SiO₄ raw material containing 0.02 to 0.05 mass % CaO) powder having a Mg/Si molar ratio of 1.95 to 2.0 and a peak ratio a/b of 0.0 to 0.8, which was determined by the method described previously, was adjusted to have an average particle diameter of 0.7 µm. After 100 parts by weight of the powder was mixed with 0.2 to 1.2 parts by weight of a SrCO₃ powder (average particle diameter of 1 µm), 0 to 5 parts by weight of a NiO powder (average particle diameter of 0.5 µm), 20 parts by weight of a solvent (water), 8 parts by weight of a binder (methyl cellulose), 0.5 parts by weight of a lubricant, and 15 parts by weight of a pore forming agent (acrylic resin particles having an average particle diameter of 5 µm) using a high-speed mixer, the mixture was kneaded with a kneader and deaerated with a vacuum kneader. Thus, a green body for extrusion was prepared.

### (Preparation of Paste for Fuel Electrode Layer)

A paste for fuel electrode layer was prepared in the same manner as in Example 1.

### (Preparation of Paste for Fuel Electrode Catalyst Layer)

A paste for fuel electrode catalyst layer was prepared in the same manner as in Example 1.

### (Preparation of Paste for Reaction Prevention Layer)

A paste for reaction prevention layer was prepared in the same manner as in Example 1.

### (Preparation of Paste for Electrolyte Layer)

A paste for electrolyte layer was prepared in the same manner as in Example 1.

### (Preparation of Paste for Air Electrode)

A paste for air electrode was prepared in the same manner as in Example 1.

### (Preparation of Paste for Interconnector)

A paste for interconnector was prepared in the same manner as in Example 1.

### (Preparation of Solid Oxide Fuel Cell Stack)

Using the green body and the pastes obtained as described above, a solid oxide fuel cell stack was prepared by the same method as that in Example 4.

### (Power Generation Test)

Using the obtained solid oxide fuel cell stack, a power generation test was conducted under the same conditions as those in Example 1. Table 1 shows the results.

### (Comparative Example 1)

### (Preparation of Green Body for Insulating Support)

A commercially-available synthetic forsterite (FF-200-M40 manufactured by Marusu Glaze Co., Ltd., the purities of MgO and SiO₂ in total were 95.86%) powder was adjusted to have an average particle diameter of 1.1 µm. After 100 parts by weight of the powder was mixed with 2 parts by weight of a SrCO₃ powder (average particle diameter of 1 µm), 5 parts by weight of a NiO powder (average particle diameter of 0.5 µm), 20 parts by weight of a solvent (water), 8 parts by weight of a binder (methyl cellulose), 0.5 parts by weight of a lubricant, and 15 parts by weight of a pore forming agent (acrylic resin particles having an average particle diameter of 5 µm) using a high-speed mixer, the mixture was kneaded with a kneader and deaerated with a vacuum kneader. Thus, a green body for extrusion was prepared.

### (Preparation of Paste for Fuel Electrode Layer)

A paste for fuel electrode layer was prepared in the same manner as in Example 1.

### (Preparation of Paste for Fuel Electrode Catalyst Layer)

A paste for fuel electrode catalyst layer was prepared in the same manner as in Example 1.

### (Preparation of Paste for Reaction Prevention Layer)

A paste for reaction prevention layer was prepared in the same manner as in Example 1.

### (Preparation of Paste for Electrolyte Layer)

A paste for electrolyte layer was prepared in the same manner as in Example 1.

### (Preparation of Paste for Air Electrode)

A paste for air electrode was prepared in the same manner as in Example 1.

### (Preparation of Paste for Interconnector)

A paste for interconnector was prepared in the same manner as in Example 1.

### (Preparation of Solid Oxide Fuel Cell Stack)

Using the green body and the pastes obtained as described above, a solid oxide fuel cell stack was prepared by the same method as that in Example 4.

### (Power Generation Test)

Using the obtained solid oxide fuel cell stack, a power generation test was conducted under the same conditions as those in Example 1. Table 1 shows the results. The solid oxide fuel cell stack of Comparative Example 1 had a maximum electromotive force of only 0.55 V.

### (Comparative Example 2)

### (Preparation of Green Body for Insulating Support)

A high purity forsterite (Mg₂SiO₄ raw material containing 0.05 mass % CaO) powder having an Mg/Si molar ratio of 1.98 and a peak ratio a/b of 0.2, which was determined by a method described previously, was adjusted to have an average particle diameter of 0.7 µm. After 100 parts by weight of the powder was mixed with 1 part by weight of a SrCO₃ powder (average particle diameter of 1 µm), a 5 parts by weight of a NiO powder (average particle diameter of 0.5 µm), 20 parts by weight of a solvent (water), 8 parts by weight of a binder (methyl cellulose), 0.5 parts by weight of a lubricant, and 15 parts by weight of a pore forming agent (acrylic resin particles having an average particle diameter of 5 µm) using a high-speed mixer, the mixture was kneaded with a kneader and deaerated with a vacuum kneader. Thus, a green body for extrusion was prepared.

### (Preparation of Paste for Fuel Electrode Layer)

A paste for fuel electrode layer was prepared in the same manner as in Example 1.

### (Preparation of Paste for Fuel Electrode Catalyst Layer)

A paste for fuel electrode catalyst layer was prepared in the same manner as in Example 1.

### (Preparation of Paste for Reaction Prevention Layer)

A paste for reaction prevention layer was prepared in the same manner as in Example 1.

### (Preparation of Paste for Electrolyte Layer)

A paste for electrolyte layer was prepared in the same manner as in Example 1.

### (Preparation of Paste for Air Electrode)

A paste for air electrode was prepared in the same manner as in Example 1.

### (Preparation of Paste for Interconnector)

The material used for an interconnector was a powder having a composition of La_{0.75}Ca_{0.25}CrO₃. After 40 parts by weight of the powder was mixed with 100 parts by weight of a solvent (carbitol), 4 parts by weight of a binder (soluble polymer), 1 part by weight of a dispersant (nonionic surfactant), and 1 part by weight of an anti-foaming agent (organic polymer based), the mixture was fully stirred to prepare a paste.

### (Preparation of Solid Oxide Fuel Cell Stack)

Using the green body and the pastes obtained as described above, a solid oxide fuel cell stack was prepared by the same method as that in Example 4.

### (Power Generation Test)

Using the obtained solid oxide fuel cell stack, a power generation test was conducted under the same conditions as those in Example 1. Table 1 shows the results. The solid oxide fuel cell stack of Comparative Example 2 had a maximum electromotive force of only 0.6 V.

**[Table 1]**

| | Example 4 | Example 5 | Example 6 | Example 7 | Example 8 | Comparative Example 1 | Comparative Example 2 |
|---|---|---|---|---|---|---|---|
| MgO and SiO₂ conversion concentrations in insulating support (mass %) | 99.5 | 98.7 | 97.7 | 94.2 | 92.2 | 87.5 | 99.5 |
| CaO conversion concentration in insulating support (mass %) | 0.07 | 0.03 | 0.04 | 0.03 | 0.04 | 0.3 | 0.07 |
| sr_{1-3X/2}LaₓTi_{1-y}O_{3-δ} | X=0.3 | X=0.3 | X=0.3 | X=0.3 | X=0.3 | X=0.3 | La_{0.75}Ca_{0.25}CrO₃ |
| | Y=0 | Y=0 | Y=0 | Y=0 | Y=0 | Y=0 | |
| Mg/Si ratio | 1. 98 | 1. 99 | 1.98 | 1.97 | 1.98 | 1.87 | 1.98 |
| peak ratio a/b (%) | 0.0 | 0.2 | 0.1 | 0.0 | 0.1 | 0.3 | 0.0 |
| OCV | 1.13 | 1.07 | 1.03 | 1.00 | 0.98 | 0.55 | 0.6 |
| electric potential per power generating element at a current density of 0.20 A/cm² | 0.85 | 0.82 | 0.77 | 0.74 | 0.75 | immeasurable | immeasurable |
| electric potential per power generating element at a current density of 0.40 A/cm² | 0.73 | 0.70 | 0.65 | 0.58 | 0.61 | immeasurable | immeasurable |

## Claims

1. A solid oxide fuel cell stack (210) comprising:
a porous insulating support (201) having a gas permeability and provided with a gas flow path therein; and
a plurality of power generating elements (10) which are provided on the insulating support (201), each of the plurality of power generating elements (10) comprising an inner electrode (202), an electrolyte (203), and an outer electrode (204), the inner electrode, the electrolyte and the outer electrode being sequentially laminated one another,
the inner electrode (202) of one of adjacent two of the plurality of power generating elements (10) being electrically connected to the outer electrode (204) of the other of the adjacent two of the plurality of power generating elements (10) via an interconnector (206), so that the plurality of power generating elements (10) are connected in series, wherein
the insulating support (201) comprises forsterite,
the insulating support (201) contains a Mg element and a Si element with a concentration of 90 mass % or more in total in terms of MgO and SiO₂, at least in a surface region on the power generating elements side, and
the interconnector (206) comprises titanium-based perovskite type oxide represented by (A, B) (Ti, C) O_{3-δ},
wherein A represents Ca, Sr, Mg, or Ba,
B represents Sc, Y, or a lanthanoid element selected from the group consisting of La, Ce, Pr, Nd, Pm, Sm, Eu, Gd, Tb, Dy, Ho, Er, Tm, Yb, and Lu, and substitutes for a portion of an A site,
C represents Nb, Mn, Ga, or Sc and substitutes for a Ti site, or is absent, and 0 ≤ δ ≤ 0.8.

2. The solid oxide fuel cell stack according to claim 1, wherein the titanium-based perovskite type oxide is lanthanum strontium titanate represented by a general formula:
Sr_{1-3X/2}La_{X}Ti_{1-y}O_{3-δ}, wherein lanthanum substitutes for a portion of strontium, with 0.1 < x ≤ 0.4, 0 ≤ y ≤ 0.4 and 0 ≤ δ ≤ 0.8.

3. The solid oxide fuel cell stack according to claim 1 or 2, wherein the insulating support (201) contains a Ca element with a concentration of 0.2 mass % or less in terms of CaO at least in the surface region on the power generating elements side.

4. The solid oxide fuel cell stack according to any one of claims 1 to 3, wherein the insulating support (201) is a laminate including two or more layers having different Ca element contents.

5. The solid oxide fuel cell stack according to any one of claims 1 to 4, wherein
the inner electrode (202) is a fuel electrode, and
the outer electrode (204) is an air electrode.
